# EUROPÄISCHE PATENTSCHRIFT

(11) **EP 3 924 714 B1**
(45) Veröffentlichungstag und Bekanntmachung des Hinweises auf die Patenterteilung: **17.01.2024**
(21) Anmeldenummer: 20705046.9
(22) Anmeldetag: 11.02.2020
(51) Int. Cl.: G01N 3/08, G01N 19/04, G01N 3/04, B23K 31/12, B23K 101/38, B23K 20/00, G01N 3/16, B23K 101/00

(54) **VERFAHREN UND SYSTEM ZUM PRÜFEN EINER STOFFSCHLÜSSIGEN FÜGEVERBINDUNG ZWISCHEN EINEM LITZENLEITER UND EINEM KONTAKTTEIL**
METHOD AND SYSTEM FOR TESTING THE JOINING CONNECTION BETWEEN A STRANDED WIRE AND A CONTACT PART
PROCÉDÉ ET SYSTÈME POUR EXAMINER PAR LA CONNECTION ENTRE UN CÂBLE À TORON ET UNE PIÈCE DE CONTACT ENGAGÉ PAR LIAISON DE MATIÈRE

(30) Priorität: 14.02.2019 DE 102019103758
(43) Veröffentlichungstag der Anmeldung: 22.12.2021
(73) Patentinhaber: Lisa Dräxlmaier GmbH, 84137 Vilsbiburg (DE)
(72) Erfinder: ZEMANN, Daniel, 84036 Landshut (DE); EWINGER, Stefan, 84137 Vilsbiburg (DE); LEHMANN, Lutz, Landshut 84028 (DE)
(86) Internationale Anmeldenummer: PCT/EP2020/053471
(87) Internationale Veröffentlichungsnummer: WO 2020/165169

(56) Entgegenhaltungen:
- DE-A1- 19 749 682
- DE-A1- 19 749 682
- DE-A1-102012 219 411
- DE-B3- 10 350 809
- DE-B3- 10 350 809
- ANONYMOUS: "DIN EN ISO 14270 Widerstandsschweißen - Zerstörende Prüfung von Schweißverbindungen - Probenmaße und Verfahren für die mechanisierte Schälprüfung an Widerstandspunkt-, Rollennaht- und Buckelschweißungen mit geprägten Buckeln", 31 October 2016 (2016-10-31), DIN EN ISO NORM, DIN; ISO, PAGE(S) 1 - 22, XP009537801,

## Beschreibung

### Technisches Gebiet

Die vorliegende Erfindung betrifft ein Verfahren und ein System zum Prüfen einer stoffschlüssigen Fügeverbindung zwischen einem Litzenleiter und einem Kontaktteil.

### Stand der Technik

Die Qualität stoffschlüssig verbundener Fügeteile, insbesondere ultraschallgeschweißter, lasergeschweißter oder widerstandshartgelöteter Verbindungen lässt sich in der Fertigung üblicherweise nicht zerstörungsfrei feststellen. Daher ist es gängig, die Qualität einer stoffschlüssigen Fügeverbindung stichprobenartig durch die maximale Bruchkraft zu überprüfen, die zur Trennung der Fügeteile notwendig ist.

In der Automobilindustrie betrifft dies vor allem ultraschallgeschweißte Verbindungen von Litzenleitern mit Kontaktteilen oder Litzenleitern untereinander. Meist werden solche Fügeteile bei der Bruchprüfung getrennt, indem das Kontaktteil geklemmt und mit einer linearen Zugvorrichtung an einem Kabel des Litzenleiters gezogen oder im Falle mehrerer Litzenleiter aus dem sogenannten Spleiß gezogen bzw. gerissen wird.

Es gibt allerdings Fälle, in denen eine feste Einspannung des Kontaktteils nicht möglich ist. Dies kann insbesondere der Fall sein, wenn eine Blechstärke des Kontaktteils relativ gering und dessen Breite nur wenig größer als die Breite des sogenannten Schweißknotens des Litzenleiters ist, bei welchem es sich um stoffschlüssig miteinander verbundene Litzen des betreffenden Litzenleiters handelt. Derartige Verbindungen lassen sich in der vorstehend beschriebenen Weise nicht prüfen. Die DE 197 49 682 A1 offenbart ein Prüfverfahren zum zerstörungsfreien Prüfen eines Schweißverbinders, eine Prüfvorrichtung und ein Ultraschallschweißgerät mit einer solchen Vorrichtung. Die DE 103 50 809 B3 offenbart ein Verfahren zum Verschweißen von Leitern.

### Beschreibung der Erfindung

Es ist die Aufgabe der vorliegenden Erfindung, eine Lösung bereitzustellen, mittels welcher eine stoffschlüssige Fügeverbindung zwischen einem Litzenleiter und einem Kontaktteil besonders einfach und zuverlässig geprüft und bei bestimmten Fügeverbindungen überhaupt überprüft werden kann.

Diese Aufgabe wird durch ein Verfahren sowie durch ein System zum Prüfen einer stoffschlüssigen Fügeverbindung zwischen einem Litzenleiter und einem Kontaktteil mit den Merkmalen der unabhängigen Patentansprüche gelöst. Vorteilhafte Ausgestaltungen mit zweckmäßigen und nicht trivialen Weiterbildungen der Erfindung sind in den abhängigen Ansprüchen angegeben.

Bei dem erfindungsgemäßen Verfahren zum Prüfen einer stoffschlüssigen Fügeverbindung zwischen einem Litzenleiter und einem Kontaktteil wird ein mehrere stoffschlüssig miteinander verbundene Einzeldrähte aufweisender Schweißknoten des Litzenleiters zumindest mittelbar mittels einer Fixiervorrichtung fixiert. Zum Prüfen der stoffschlüssigen Fügeverbindung wird dann die Fügeverbindung durch Ablösen des Kontaktteils vom Litzenleiter zerstört, und zwar mittels einer zumindest mittelbar am Kontaktteil angreifenden Prüfvorrichtung.

Bei der Fixiervorrichtung kann es sich beispielsweise um eine Art Spannvorrichtung handeln, mittels welcher der Schweißknoten festgeklemmt wird, wobei beispielsweise ein Blech des Kontaktteils anschließend abgetrennt wird. Für typische Verbindungen einer Litze mit einem Kontaktteil wird also anstatt wie bisher das Kontaktteil festzuklemmen und die Litze abzuschälen stattdessen umgekehrt der Schweißknoten des Litzenleiters festgeklemmt und das Kontaktteil beispielsweise durch Abschälen abgetrennt. Bei der eingangs beschriebenen herkömmlichen Prüfung wird also der Litzenleiter deformiert, wohingegen bei der vorliegenden Erfindung das Kontaktteil vom Litzenleiter unter Zerstören der Fügeverbindung abgelöst wird, um die stoffschlüssige Fügeverbindung zwischen dem Litzenleiter und dem Kontaktteil zu prüfen.

Der Vorteil des erfindungsgemäßen Verfahrens ist insbesondere, dass bei der Auslegung der Schweißgeometrie nicht mehr auf das Prüfen der stoffschlüssigen Verbindung Rücksicht genommen werden muss. Eine Deformation des Kontaktteils ist im Gegensatz zur eingangs beschriebenen herkömmlichen Prüfmethode erwünscht und notwendig zum Trennen der Verbindung. Gerade bei dünnen Blechen würde das Kontaktteil bei der herkömmlichen Prüfmethode unerwünscht deformiert werden, was eine hohe Streuung des Prüfergebnisses zur Folge hätte. Bei Kontaktteilen, deren Breite nur wenig größer als die Breite des Schweißknotens ist, kann nur die neu entwickelte Prüfmethode angewendet werden. Das Kontaktteil muss auch bei dem neuen Prüfverfahren zur Kraftübertragung geklemmt werden, nur an einer anderen Stelle. Dadurch wird das eingangs beschriebene Problem unmittelbar gelöst, bei welchem eine feste Einspannung des Kontaktteils nicht möglich ist, insbesondere wenn eine Blechstärke des Kontaktteils sehr gering und dessen Breite nur wenig größer als die Breite des Schweißknotens ist.

Ein weiteres Manko der eingangs beschriebenen herkömmlichen Prüfung besteht darin, dass durch die gemessenen Bruchkräfte nicht die tatsächliche Festigkeit der stoffschlüssigen Fügeverbindung festgestellt bzw. ermittelt werden kann. Eine mittels herkömmlicher Prüfung überprüfte stoffschlüssige Verbindung kann in Wahrheit beispielsweise eine geringere Festigkeit in der Fügezone aufweisen als eine andere, obwohl das mit dem herkömmlichen Verfahren anders suggeriert wird.

Dies liegt unter anderem daran, dass durch den herkömmlichen Prüfprozess eine zusätzliche statistische Streuung erfolgt, weil der Lastfall bei der Prüfung ein Verbiegen der Litze bzw. des Litzenleiters beinhaltet. Durch das Verbiegen der Litze und des Schweißknotens (während des Trennvorganges) lösen sich Einzeldrähte untereinander - vergleichbar mit Delamination - und führen dadurch zu einer größeren Streuung. Zufällige Variationen der Lage der Einzeldrähte bewirken, dass der tatsächliche Lastfall stets unkontrolliert unterschiedlich ist. Bei dem erfindungsgemäßen Verfahren hingegen ist der Lastfall bei der Prüfung definierter als bei der eingangs beschriebenen herkömmlichen Prüfung. Damit wird die Qualität der einzelnen Schweißungen bzw. stoffschlüssigen Verbindungen besser wiedergegeben. Mittels des erfindungsgemäßen Verfahrens kann die maximale Bruchkraft als Qualitätskriterium herangezogen werden. Die Festigkeit der Verbindung wird nicht ermittelt, da beim Schälversuch ein inhomogener Spannungszustand vorliegt. Es kann allerdings ein sogenannter Schälwiderstand ermittelt werden, indem die maximale Bruchkraft durch die Breite der Bruchzone dividiert wird.

Eine mögliche Ausführungsform der Erfindung sieht vor, dass eine maximal mittels der Prüfvorrichtung zum Ablösen des Kontaktteils aufgebrachte Kraft ermittelt und basierend darauf eine Qualität der stoffschlüssigen Verbindung beurteilt wird. Auf diese Weise ist es beim Prüfen der stoffschlüssigen Fügeverbindung möglich, ganz einfach auf Basis der maximal aufgebrachten Kraft die Güte der durch Zerstörung geprüften Fügeverbindung zu ermitteln. Statt der maximal aufgebrachten Kraft kann je nach Aufbau des zum Prüfen der stoffschlüssigen Fügeverbindung verwendeten Systems auch ein maximal aufgebrachtes Moment ermittelt werden, aus dem dann die maximale Bruchkraft berechnet wird.

Eine weitere mögliche Ausführungsform der Erfindung sieht vor, dass vor dem Ablösen des Kontaktteils ein am Kontaktteil angeordneter oder ausgeformter Steckbereich entfernt und danach die Prüfvorrichtung unmittelbar am Kontaktteil, beispielsweise an einem Schweißbereich des Kontaktteils, zum Ablösen des Kontaktteils vom Litzenleiter angreift. Dadurch kann eine besonders zuverlässige Fixierung des Kontaktteils an der Prüfvorrichtung sichergestellt werden, in Folge dessen auch der Ablösevorgang des Kontaktteils besonders zuverlässig erfolgen kann. Unter Steckbereich ist derjenige Bereich des Kontaktteils zu verstehen, der einen elektrischen Kontakt mit einem Gegenstück, z.B. einem Messer oder einer Buchse, herstellen kann. Dieser Bereich kann aus dem gleichen Grundmaterial hergestellt sein, aus dem auch die zu prüfende Fügeverbindung bzw. ein Schweißbereich der Fügeverbindung besteht. Bei Buchsenkontakten ist um diesen Steckbereich oft eine Edelstahl-"Überfeder" angeordnet, die die Form eines Gehäuses hat. Eben dieser Steckbereich kann komplett mitsamt der Überfeder abgetrennt werden.

Alternativ ist es aber auch möglich, dass man auf die Entfernung des besagten Steckbereichs verzichtet. In diesem Fall kann beispielsweise ein Blech des Kontaktteils zusammen mit dem Steckbereich durch die Prüfvorrichtung eingeklemmt werden, bevor das Kontaktteil dann mittels der Prüfvorrichtung unter Zerstörung der Fügeverbindung vom Litzenleiter abgelöst wird.

Gemäß einer weiteren möglichen Ausführungsform der Erfindung ist es vorgesehen, dass die Fixiervorrichtung zwei Klemmbacken aufweist, zwischen denen der Schweißknoten festgeklemmt und dadurch fixiert wird. Auf diese Weise kann der Schweißknoten des Litzenleiters besonders zuverlässig fixiert werden. Die Klemmbacken müssen dafür einfach nur aufeinander zu bewegt werden, in Folge dessen der zwischen den Klemmbacken angeordnete Schweißknoten zuverlässige fixiert wird.

Erfindungsgemäß weist die Prüfvorrichtung zwei Klemmbacken auf, zwischen denen das Kontaktteil zumindest mittelbar eingeklemmt und zum Ablösen des Kontaktteils zumindest im Wesentlichen quer zur Längsrichtung des Litzenleiters mit einer Zugkraft beaufschlagt wird. Dadurch ergibt sich der bereits erwähnte Abschälvorgang, gemäß welchem das Ablösen des Kontaktteils vom Litzenleiter unter Zerstörung der Fügeverbindung erfolgt. Mittels der Prüfvorrichtung wird also einfach das zwischen den beiden Klemmbacken zumindest mittelbar eingeklemmte Kontaktteil einfach quer zur Haupterstreckungsrichtung und somit in Längsrichtung des Litzenleiters von diesem weggezogen, in Folge dessen das Kontaktteil sukzessive von dem Litzenleiter in der Fügezone der stoffschlüssigen Fügeverbindung abgelöst wird.

Gemäß einer weiteren möglichen Ausführungsform der Erfindung ist es vorgesehen, dass ein freier Endbereich des Kontaktteils erst quer zur Längsrichtung des Litzenleiters weggebogen und danach mit der Zugkraft beaufschlagt wird. Der Vorteil besteht darin, dass die Prüfvorrichtung nicht erst den besagten Biegevorgang vornehmen muss. Stattdessen kann es beispielsweise vorgesehen sein, dass mittels einer anderen Vorrichtung oder durch einen Werker der besagte freie Endbereich des Kontaktteils erst quer zur Längsrichtung des Litzenleiters weggebogen und danach erst die Beaufschlagung mit der Zugkraft mittels der Prüfvorrichtung vorgenommen wird. Dies kann insbesondere dann von Vorteil sein, wenn die Prüfvorrichtung selbst keine besonders schnelle Verfahrbewegung realisieren kann. In dem Fall wird ein großer Teil der Bewegung zuerst durch das Wegbiegen des freien Endbereichs des Kontaktteils realisiert, bevor die Zugkraft aufgebracht werden muss, welche dann vergleichsweise eine geringe Hubbewegung ausführen muss. Dadurch kann Zeit beim Prüfverfahren eingespart werden.

Eine alternative mögliche Ausführungsform der Erfindung sieht vor, dass die Prüfvorrichtung eine Walze aufweist, an deren Mantelfläche das Kontaktteil zumindest mittelbar fixiert und durch Rotation der Walze vom Litzenleiter abgelöst wird. Durch entsprechende Dimensionierung des Walzendurchmessers kann ein an der Walze aufzubringendes Moment entsprechend eingestellt werden. Weist die Walze beispielsweise einen sehr großen Umfang bzw. einen sehr großen Durchmesser auf, so ergibt sich ein entsprechend günstiges Übersetzungsverhältnis, in Folge dessen an der Walze selbst gar kein besonders hohes Moment aufgebracht werden muss, um das Ablösen des Kontaktteils vom Litzenleiter realisieren zu können. Insbesondere ist ein Vorbiegen des Kontaktteils in dem Fall gar nicht notwendig, da ein Blech des Kontaktteils einfach durch Rotation der Walze und die dadurch verursachte Verschiebung sich selbst verbiegt. Durch einen sehr großen Durchmesser kann allerdings der Schweißknoten aus der Einspannung gezogen werden, weil dadurch sehr hohe Kräfte zum Trennen der Verbindung nötig sind. Der Durchmesser wird daher geeignet gewählt, sodass der Schweißknoten während des gesamten Trennvorganges sicher in der Einspannung verbleibt.

Gemäß einer weiteren möglichen Ausführungsform der Erfindung ist es vorgesehen, dass die Fixiervorrichtung während des Ablösens des Kontaktteils derart relativ zur Prüfvorrichtung bewegt wird, dass eine Relativposition einer sich in Längsrichtung des Litzenleiters verschiebenden Ablöselinie, an welcher sich das Kontaktteil vom Litzenleiter löst, zumindest im Wesentlichen unverändert zur Prüfvorrichtung bleibt. Dies ist insbesondere bei der Ausführungsform sinnvoll und vorteilhaft, wenn die Prüfvorrichtung die besagte Walze aufweist, In dem Fall ist es besonders vorteilhaft, wenn die Fixiervorrichtung während des Ablösens des Kontaktteils derart relativ zur Prüfvorrichtung bewegt wird, dass die Relativposition der sich verschiebenden Ablöselinie zumindest im Wesentlichen unverändert zur Prüfvorrichtung gehalten wird. Beispielsweise kann die Fixiervorrichtung selbst aktiv und synchron mit der Rotation der Walze bewegt werden. Die Synchronisation der Rotation der Walze mit der translatorischen Bewegung der Fixiervorrichtung kann beispielsweise durch eine mechanische Kopplung realisiert werden, zum Beispiel durch einen Zahnstangenantrieb oder dergleichen.

Eine weitere mögliche Ausführungsform der Erfindung sieht vor, dass die Fixiervorrichtung translatorisch beweglich gelagert und entsprechend der sich verschiebenden Ablöselinie nachgeführt wird, um die Relativposition der sich verschiebenden Ablöselinie zumindest im Wesentlichen unverändert zur Prüfvorrichtung zu halten. Die translatorisch bewegliche Lagerung kann beispielsweise über einen translatorisch beweglich gelagerten Schlitten oder dergleichen erfolgen. Der Schlitten selbst kann dabei aktiv angetrieben sein, sodass die zuvor bereits erwähnte Bewegungssynchronisation zwischen der Drehung der Walze der Prüfvorrichtung und der translatorischen Bewegung der Fixiervorrichtung realisiert werden kann. Auch bei der anderen Ausführungsform, bei welcher die Prüfvorrichtung die beiden Klemmbacken aufweist, zwischen denen das Kontaktteil zumindest mittelbar eingeklemmt und zum Ablösen des Kontaktteils zumindest im Wesentlichen quer zur Längsrichtung des Litzenleiters mit der Zugkraft beaufschlagt wird, kann die Fixiervorrichtung translatorisch beweglich gelagert sein und entsprechend der sich verschiebenden Ablöselinie nachgeführt werden, um die Relativposition der sich verschiebenden Ablöselinie zumindest im Wesentlichen zur Prüfvorrichtung zu halten. In dem Fall schneidet sich eine Art Kraftvektor, gemäß welchem die Zugkraft am Kontaktteil aufgebracht wird mit der Ablöselinie. Mit anderen Worten kann dadurch die Ablöselinie im Wesentlichen lotrecht unterhalb des Kraftangriffspunkts angeordnet sein, an welchem die Prüfvorrichtung am Kontaktteil angreift. In Folge dessen kann ein besonders exaktes Prüfergebnis erzielt werden, da zumindest im Wesentlichen die Kraftkomponente, die mittels der Prüfvorrichtung aufgebracht wird, ausschließlich quer zur Längsrichtung des Litzenleiters und somit quer zur Fügefläche aufgebracht wird. Dies gilt zumindest dann, wenn die Reibung bei der translatorischen Bewegung des Schlittens sehr gering bleibt.

Das erfindungsgemäße System zum Prüfen einer stoffschlüssigen Fügeverbindung zwischen einem Litzenleiter und einem Kontaktteil umfasst eine Fixiervorrichtung zum Fixieren eines mehrere stoffschlüssig miteinander verbundene Einzeldrähte aufweisenden Schweißknotens des Litzenleiters sowie eine Prüfvorrichtung, welche dazu ausgelegt ist, zum Zerstören der Fügeverbindung zumindest mittelbar am Kontaktteil anzugreifen und dieses vom Litzenleiter abzulösen. Vorteilhafte Ausgestaltungen des erfindungsgemäßen Verfahrens sind als vorteilhafte Ausgestaltungen des erfindungsgemäßen Systems und umgekehrt anzusehen, wobei das System insbesondere Mittel zur Durchführung der Verfahrensschritte aufweist.

### Kurze Figurenbeschreibung

Die Zeichnung zeigt in:
- Fig. 1: eine Perspektivansicht einer stoffschlüssigen Fügeverbindung zwischen einem Litzenleiter und einem blechförmigen Kontaktteil, an welchem noch ein Steckbereich angebracht bzw. ausgeformt ist;
- Fig. 2: eine weitere Perspektivansicht der Fügeverbindung, wobei der Steckbereich vom blechförmigen Kontaktteil entfernt wurde;
- Fig. 3: eine schematische Perspektivansicht einer ersten Ausführungsform eines Systems zum Prüfen der stoffschlüssigen Fügeverbindung, wobei das System unter anderem eine Prüfvorrichtung aufweist, mittels welcher das blechförmige Kontaktteil nach oben vom Litzenleiter weggezogen wird; und in
- Fig. 4: eine schematische Perspektivansicht einer weiteren Ausführungsform des Systems, wobei dieses zur Ablösung des Kontaktteils vom Litzenleiter eine walzenartige Prüfvorrichtung aufweist.

In den Figuren sind gleiche oder funktionsgleiche Elemente mit den gleichen Bezugszeichen versehen worden.

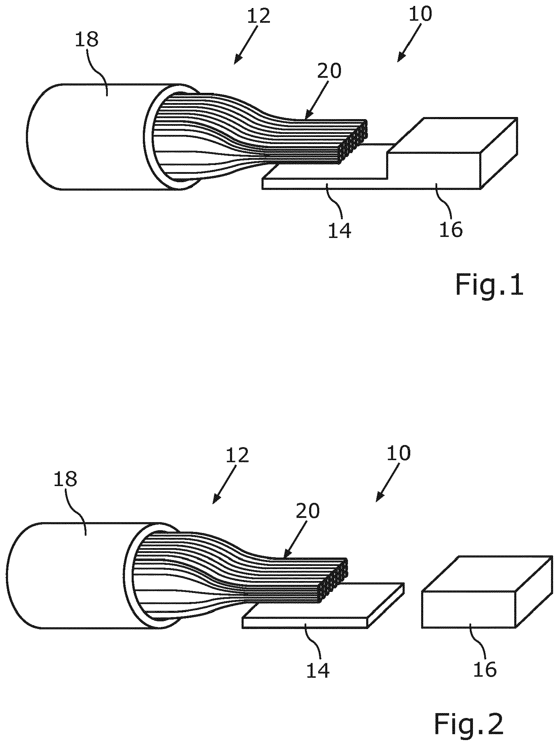

Eine stoffschlüssige Fügeverbindung 10 ist in einer Perspektivansicht in Fig. 1 gezeigt. Die stoffschlüssige Fügeverbindung 10 besteht zwischen einem Litzenleiter 12 und einem blechförmigen Kontaktteil 14. An dem blechförmigen Kontaktteil 14 ist vorliegend noch ein schematisch angedeuteter Steckbereich 16 angeordnet bzw. ausgeformt. Der Litzenleiter 12 ist von einer Isolierung 18 umgeben, welche hier nicht näher bezeichnete Einzeldrähte des Litzenleiters 12 isolierend umgibt.

In einem nicht näher bezeichneten Fügebereich, welcher als Überlappstoß ausgebildet ist, weist der Litzenleiter 12 einen sogenannten Schweißknoten 20 auf, der mehrere stoffschlüssig miteinander verbundene Einzeldrähte umfasst. Wurde die stoffschlüssige Fügeverbindung 10 beispielsweise mittels Ultraschallschweißen hergestellt, so ergibt sich eine Kaltverschweißung, in Folge dessen die Einzeldrähte des Litzenleiters 12 im Bereich des Schweißknotens 20 stoffschlüssig miteinander verbunden werden und dieser Schweißknoten 20 wiederum stoffschlüssig mit dem blechartigen Kontaktteil 14 verbunden wird.

In Fig. 2 ist die stoffschlüssige Fügeverbindung 10 in einer weiteren Perspektivansicht gezeigt, wobei lediglich der Steckbereich 16 vom blechförmigen Kontaktteil 14 entfernt wurde. Unter anderem im automobilen Umfeld ist es wichtig, die Qualität derartig stoffschlüssig miteinander verbundener Fügeteile in Form des Litzenleiters 12 und dem Kontaktteil 14 feststellen zu können. Nachfolgend wird ein Verfahren zum Prüfen der stoffschlüssigen Fügeverbindung 10 näher anhand der nachfolgenden Figuren erläutert.

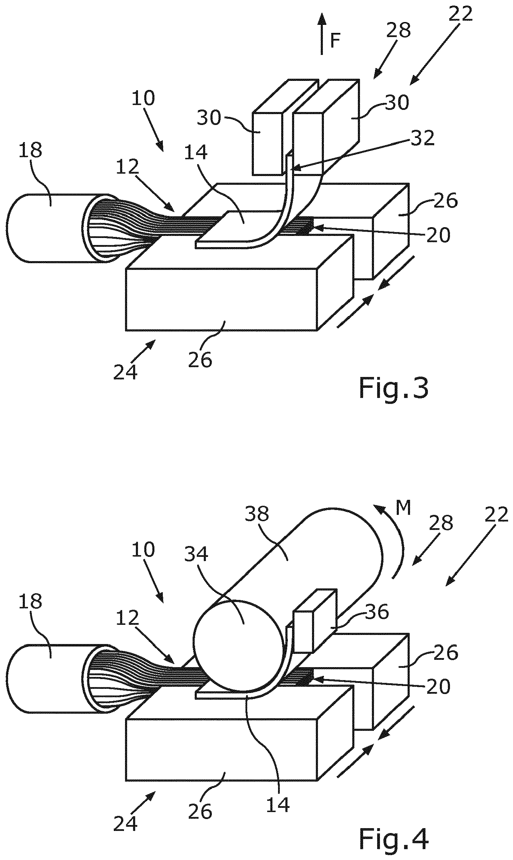

In Fig. 3 ist eine erste Ausführungsform eines Systems 22 zum Prüfen der stoffschlüssigen Verbindung 10 in einer schematischen Perspektivansicht gezeigt. Das System 22 umfasst eine Fixiervorrichtung 24 mit zwei Klemmbacken 26 zum Fixieren des Schweißknotens 20. Des Weiteren umfasst das System 22 eine nur schematisch angedeutete Prüfvorrichtung 28, welche ihrerseits wiederum zwei Klemmbacken 30 aufweist, zwischen denen ein freies Ende 32 des blechförmigen Kontaktteils 14 eingeklemmt werden kann.

Zum Prüfen der stoffschlüssigen Fügeverbindung 10 zwischen dem Litzenleiter 12 und dem Kontaktteil 14 wird zunächst der Schweißknoten 20 zwischen den beiden Klemmbacken 26 eingespannt und somit fixiert. Die beiden Klemmbacken 26 werden aufeinander zubewegt, in Folge dessen der Schweißknoten 20 zwischen den Klemmbacken 26 eingeklemmt wird. Anschließend kann das freie Ende 32 beispielsweise in die hier gezeigte Stellung hochgebogen werden, was beispielsweise ein Werker manuell vornehmen kann. Anschließend wird das nach oben gebogene freie Ende 32 zwischen den beiden Klemmbacken 30 der Prüfvorrichtung 28 eingespannt. Danach wird die Fügeverbindung zum Prüfen derselben durch Ablösen des Kontaktteils 14 vom Litzenleiter 12 mittels der am freien Ende 32 des Kontaktteils 14 angreifenden Prüfvorrichtung 28 zerstört. Zum Ablösen des Kontaktteils 14 wird dieses zumindest im Wesentlichen quer zur Längsrichtung des Litzenleiters 12 mit einer Zugkraft F beaufschlagt.

Bei der hier gezeigten konkreten Ausführungsform wird also das blechförmige Kontaktteil 14 direkt zwischen den beiden Klemmbacken 30 der Prüfvorrichtung 28 eingespannt. Da das blechförmige Kontaktteil 14 zumindest im Wesentlichen im rechten Winkel zur hier nicht näher bezeichneten Fügezone, in welcher der Litzenleiter 12 mit seinem Schweißknoten 20 am Kontaktteil 14 verbunden ist, abgezogen wird, wird das freie Ende 32 wie bereits erwähnt vorzugsweise um 90° vom Litzenleiter 12 weggebogen. Alternativ ist es aber auch möglich, dass das freie Ende 32 nicht von einer Person vorgebogen wird. Stattdessen kann es sich auch durch Selbstausrichtung der Klemmbacken 30 in Richtung der Kraftwirkungslinie der aufgebrachten Zugkraft F im Zuge des Prüfverfahrens automatisch verbiegen. Auch ist es möglich, den hier nicht dargestellten Steckbereich 16 gar nicht erst zu entfernen. Stattdessen kann in dem Fall das blechförmige Kontaktteil 14 zusammen mit dem Steckbereich 16 zwischen den Klemmbacken 30 der Prüfvorrichtung 28 eingeklemmt werden. Das Kontaktteil 14 kann auch am freien Ende 32, also dem kurzen Blechstreifen zwischen dem Steckbereich 16 und der Stirnseite des Schweißknotens 20 mit speziellen Klemmbacken gehalten werden. Durch die speziellen Klemmbacken wird eine Abtrennung des Steckbereichs 16 ebenfalls überflüssig.

In Fig. 4 ist eine weitere mögliche Ausführungsform des Systems 22 zum Prüfen der stoffschlüssigen Fügeverbindung 10 zwischen dem Litzenleiter 12 und dem blechartigen Kontaktteil 14 in einer schematischen Perspektivansicht gezeigt. Diese Ausführungsform des Systems 22 unterscheidet sich von der in Fig. 3 gezeigten Ausführungsform durch eine Walze 34 und eine Klemmeinrichtung 36, welche die beiden Klemmbacken 30 ersetzen. An der Walze 34, genauer an deren Mantelfläche 38, wird das blechförmige Kontaktteil 14 mittels der Klemmeinrichtung 36 fixiert und durch Rotation der Walze 34 vom Litzenleiter 12 abgelöst.

Bei dieser Ausführungsform wird das blechförmige Kontaktteil 14 also an die Walze 34 geklemmt, welche anschließend durch Aufbringung eines Moments M rotiert wird. Ein Vorbiegen des blechförmigen Kontaktteils 14 ist in diesem Fall nicht notwendig, da das Kontaktteil 14 durch Rotation der Walze 34 und dadurch sich von selbst entsprechend verbiegt. Die Fixiervorrichtung 24 wird während des Ablösens des Kontaktteils 14 derart relativ zur Prüfvorrichtung 28 und somit zur rotierenden Walze 34 bewegt, dass eine Relativposition einer sich in Längsrichtung des Litzenleiters 12 verschiebenden hier nicht näher gekennzeichneten Ablöselinie, an welcher sich das Kontaktteil 14 vom Litzenleiter 12 löst, zumindest im Wesentlichen unverändert zur Prüfvorrichtung 28 bleibt.

Die Fixiervorrichtung 24 kann beispielsweise an ihren Klemmbacken 26 translatorisch beweglich an einem hier nicht dargestellten Schlitten gelagert und entsprechend der sich verschiebenden Ablöselinie nachgeführt werden, um die Relativposition der sich verschiebenden Ablöselinie zumindest im Wesentlichen unverändert zur Prüfvorrichtung 28 zu halten. Insbesondere wenn das blechförmige Kontaktteil 14 sich nicht an die Walze 34 anschmiegt, das heißt diese nicht flächig berührt, wird der besagte Schlitten bevorzugt aktiv und synchron mit der Rotation der Walze 34 bewegt. Unter der besagten Ablöselinie kann auch eine Art Bruchzone verstanden werden, in welcher ein Abschälvorgang bzw. ein Ablösevorgang des blechartigen Kontaktteils 14 von dem Litzenleiter 12 erfolgt. Aufgrund des Kräftegleichgewichts wird sich die Bruchzone bzw. Bruchlinie meist zumindest im Wesentlichen direkt unter einem Kraftangriffspunkt ausrichten. Besonders in diesem Fall ist die aktive Bewegung des besagten Schlittens synchron mit der Rotation der Walze 34 vorteilhaft. Diese Synchronisierung zwischen der Rotation der Walze 34 und der Schlittenbewegung, kann beispielsweise dadurch realisiert werden, indem sie durch einen Zahnstangenantrieb miteinander gekoppelt werden.

Bei beiden Ausführungsformen kann es beispielsweise vorgesehen sein, dass eine maximal mittels der Prüfvorrichtung 28 bei Ablösen des Kontaktteils 14 aufgebrachte Kraft, also der Maximalbetrag der Zugkraft F, oder das maximal dabei aufgebrachte Moment M, ermittelt und basierend auf einer der beiden Größen eine Qualität der stoffschlüssigen Verbindung 10 ermittelt wird. Bei beiden Ausführungsformen des Systems 22 in der erläuterten Vorgehensweise liegt ein besonderer Vorteil darin, dass nicht das Kontaktteil 14 fixiert und der Litzenleiter 12 abgelöst wird, sondern genau umgekehrt vorgegangen wird, indem der Schweißknoten 20 des Litzenleiters 12 zwischen den Klemmbacken 26 fixiert und die Zugkraft F bzw. das Moment M am Kontaktteil 14 aufgebracht wird, um die Prüfung der Fügeverbindung 10 vorzunehmen.

### BEZUGSZEICHENLISTE

- 10: Fügeverbindung
- 12: Litzenleiter
- 14: Kontaktteil
- 16: Steckbereich
- 18: Isolierung
- 20: Schweißknoten des Litzenleiters
- 22: System
- 24: Fixiervorrichtung
- 26: Klemmbacken der Fixiervorrichtung
- 28: Prüfvorrichtung
- 30: Klemmbacken der Prüfvorrichtung
- 32: freies Ende des Kontaktteils
- 34: Walze
- 36: Klemmeinrichtung
- 38: Mantelfläche
- F: Zugkraft
- M: Moment

## Patentansprüche

1. Verfahren zum Prüfen einer stoffschlüssigen Fügeverbindung (10) zwischen einem Litzenleiter (12) und einem Kontaktteil (14), umfassend die Schritte
- Fixieren eines mehrere stoffschlüssig miteinander verbundene Einzeldrähte aufweisenden Schweißknotens (20) des Litzenleiters (12) mittels einer Fixiervorrichtung (24);
- Zerstören der Fügeverbindung (10) durch Ablösen des Kontaktteils (14) vom Litzenleiter (12) mittels einer zumindest mittelbar am Kontaktteil (14) angreifenden Prüfvorrichtung (28), **dadurch gekennzeichnet, dass** die Prüfvorrichtung (28) zwei Klemmbacken (30) aufweist, zwischen denen das Kontaktteil (14) zumindest mittelbar eingeklemmt und zum Ablösen des Kontaktteils (14) zumindest im Wesentlichen quer zur Längsrichtung des Litzenleiters (12) mit einer Zugkraft (F) beaufschlagt wird.

2. Verfahren nach Anspruch 1,
**dadurch gekennzeichnet, dass**
eine maximal mittels der Prüfvorrichtung (28) zum Ablösen des Kontaktteils (14) aufgebrachte Kraft (F) ermittelt und basierend darauf eine Qualität der stoffschlüssigen Verbindung beurteilt wird.

3. Verfahren nach Anspruch 1 oder 2,
**dadurch gekennzeichnet, dass**
vor dem Ablösen des Kontaktteils (14) ein am Kontaktteil (14) angeordneter oder ausgeformter Steckbereich (16) entfernt und danach die Prüfvorrichtung (28) unmittelbar am Kontaktteil (14) zum Ablösen des Kontaktteils (14) vom Litzenleiter (12) angreift.

4. Verfahren nach einem der vorhergehenden Ansprüche,
**dadurch gekennzeichnet, dass**
die Fixiervorrichtung (24) zwei Klemmbacken (26) aufweist, zwischen denen der Schweißknoten (20) festgeklemmt und dadurch fixiert wird.

5. Verfahren nach Anspruch 1,
**dadurch gekennzeichnet, dass**
ein freier Endbereich des Kontaktteils (14) erst quer zur Längsrichtung des Litzenleiters (12) weggebogen und danach mit der Zugkraft (F) beaufschlagt wird.

6. Verfahren nach Anspruch 1,
**dadurch gekennzeichnet, dass**
ein freier Endbereich des Kontaktteils (14) mit der Zugkraft (F) beaufschlagt und dadurch quer zur Längserstreckungsrichtung des Litzenleiters (12) weggebogen wird.

7. Verfahren nach einem der Ansprüche 1 bis 4,
**dadurch gekennzeichnet, dass**
die Prüfvorrichtung (28) eine Walze (34) aufweist, an deren Mantelfläche (38) das Kontaktteil (14) zumindest mittelbar fixiert und durch Rotation der Walze (34) vom Litzenleiter (12) abgelöst wird.

8. Verfahren nach einem der vorhergehenden Ansprüche,
**dadurch gekennzeichnet, dass**
die Fixiervorrichtung (24) während des Ablösens des Kontaktteils (14) derart relativ zur Prüfvorrichtung (28) bewegt wird, dass eine Relativposition einer sich in Längsrichtung des Litzenleiters (12) verschiebenden Ablöselinie, an welcher sich das Kontaktteil (14) vom Litzenleiter (12) löst, zumindest Wesentlichen unverändert zur Prüfvorrichtung (28) bleibt.

9. Verfahren nach Anspruch 8,
**dadurch gekennzeichnet, dass**
die Fixiervorrichtung (24) translatorisch beweglich gelagert und entsprechend der sich verschiebenden Ablöselinie nachgeführt wird, um die Relativposition der sich verschiebenden Ablöselinie zumindest im Wesentlichen unverändert zur Prüfvorrichtung (28) zu halten.

10. System (22) zum Prüfen einer stoffschlüssigen Fügeverbindung (10) zwischen einem Litzenleiter (12) und einem Kontaktteil (14), umfassend
- eine Fixiervorrichtung (24) zum Fixieren eines mehrere stoffschlüssig miteinander verbundene Einzeldrähte aufweisenden Schweißknotens (20) des Litzenleiters (12);
- eine Prüfvorrichtung (28), welche dazu ausgelegt ist, zum Zerstören der Fügeverbindung (10) zumindest mittelbar am Kontaktteil (14) anzugreifen und dieses vom Litzenleiter (12) abzulösen, **dadurch gekennzeichnet, dass** die Prüfvorrichtung (28) zwei Klemmbacken (30) aufweist, zwischen denen das Kontaktteil (14) zumindest mittelbar eingeklemmt und zum Ablösen des Kontaktteils (14) zumindest im Wesentlichen quer zur Längsrichtung des Litzenleiters (12) mit einer Zugkraft (F) beaufschlagt wird.

## Claims

1. Method for testing a firmly bonded joint (10) between a stranded wire (12) and a contact part (14), comprising the steps of
- Fixing a weld knot (20) of the stranded wire (12) by means of a fixing device (24), said weld knot having a plurality of individual wires connected to one another in a firmly bonded manner;
- Destroying the joint (10) by detaching the contact part (14) from the stranded wire (12) by means of a testing device (28) engaging at least indirectly with the contact part (14), **characterized in that** the testing device (28) has two clamping jaws (30) between which the contact part (14) is clamped at least indirectly and is subjected to a tensile force (F) at least substantially across the longitudinal direction of the stranded wire (12) in order to detach the contact part (14).

2. Method according to claim 1,
**characterized in that**
a maximum force (F) applied by means of the test device (28) to detach the contact part (14) is determined and a quality of the firmly bonded connection is assessed based thereon.

3. Method according to claim 1 or 2,
**characterized in that**
before the contact part (14) is detached, a mating area (16) arranged or shaped on the contact part (14) is removed and then the testing device (28) engages directly on the contact part (14) to detach the contact part (14) from the stranded wire (12).

4. Method according to any one of the preceding claims,
**characterized in that**
the fixing device (24) has two clamping jaws (26) between which the weld knot (20) is clamped and thereby fixed.

5. Method according to claim 1,
**characterized in that**
a free span of the contact part (14) is first bent away across the longitudinal direction of the stranded wire (12) and then subjected to the tensile force (F).

6. Method according to claim 1,
**characterized in that**
a free span of the contact part (14) is applied to the tensile force (F) and thereby bent away transversely to the longitudinal direction of the stranded wire (12).

7. Method according to one of the claims 1 to 4,
**characterized in that**
the testing device (28) has a roller (34), on the shell surface (38) on which the contact part (14) is fixed at least indirectly and is detached from the stranded wire (12) by rotation of the roller (34).

8. Method according to one of the preceding claims,
**characterized in that**
the fixing device (24) is moved relative to the testing device (28) during the detachment of the contact part (14) in such a way that a relative position of a peel-off line shifting in the longitudinal direction of the stranded wire (12), at which the contact part (14) detaches from the stranded wire (12), remains at least substantially unchanged relative to the testing device (28).

9. Method according to claim 8,
**characterized in that**
the fixing device (24) is translationally movable supported and tracked according to the peel-off line in order to keep the relative position of the peel-off line at least substantially unchanged with respect to the testing device (28).

10. System (22) for testing a firmly bonded joint (10) between a stranded wire (12) and a contact part (14), comprising
- a fixing device (24) for fixing a welding knot (20) of the stranded wire (12), which welding knot (20) has a plurality of individual wires which are connected to one another in a firmly bonded manner;
- a testing device (28) which is designed to engage at least indirectly with the contact part (14) in order to destroy the firmly bonded connection (10) and to detach it from the stranded wire (12), **characterized in that**
the testing device (28) has two clamping jaws (30) between which the contact part (14) is clamped at least indirectly and to detach the contact part (14) a tensile force (F) is applied at least substantially across the longitudinal direction of the stranded wire (12).

## Revendications

1. Procédé de contrôle d'un assemblage (10) par liaison de matière entre un conducteur toronné (12) et un élément de contact (14), comprenant les étapes suivantes
- Fixation d'un noeud de soudure (20) du conducteur toronné (12) présentant plusieurs fils individuels reliés entre eux par liaison de matière au moyen d'un dispositif de fixation (24) ;
- détruire d'assemblage (10) en détachant l'élément de contact (14) du conducteur toronné (12) au moyen d'un dispositif de contrôle (28) agissant au moins indirectement sur l'élément de contact (14), **caractérisée en ce que**
le dispositif de contrôle (28) présente deux mâchoires de serrage (30) entre lesquelles l'élément de contact (14) est serrée au moins indirectement et qui, pour détacher l'élément de contact (14), sont soumises à une force de traction (F) au moins sensiblement transversalement à la direction longitudinale du conducteur toronné (12).

2. Procédé selon la revendication 1,
**caractérisé en ce que**
une force (F) maximale appliquée au moyen du dispositif de contrôle (28) pour détacher l'élément de contact (14) est déterminée et une qualité de la liaison par matière est évaluée sur la base de cette force.

3. Procédé selon la revendication 1 ou 2,
**caractérisé en ce que**
avant le détachement d'élément de contact (14), une zone d'enfichage (16) disposée ou formée sur l'élément de contact (14) est retirée et ensuite le dispositif de contrôle (28) agit directement sur l'élément de contact (14) pour détacher l'élément de contact (14) du conducteur toronné (12).

4. Procédé selon l'une des revendications précédentes,
**caractérisé en ce que**
le dispositif de fixation (24) présente deux mâchoires de serrage (26) entre lesquelles le noeud de soudure (20) est serré et ainsi fixé.

5. Procédé selon la revendication 1,
**caractérisé en ce que**
une zone d'extrémité libre d'élément de contact (14) est d'abord écartée par pliage transversalement à la direction longitudinale du conducteur toronné (12), puis soumise à la force de traction (F).

6. Procédé selon la revendication 1,
**caractérisé en ce que**
une zone d'extrémité libre d'élément de contact (14) est soumise à la force de traction (F) et est ainsi pliée transversalement à la direction d'extension longitudinale du conducteur toronné (12).

7. Procédé selon l'une des revendications 1 à 4,
**caractérisé en ce que**
le dispositif de contrôle (28) présente un rouleau (34) sur la surface latérale (38) duquel l'élément de contact (14) est fixée au moins indirectement et est détachée du conducteur toronné (12) par la rotation du rouleau (34).

8. Procédé selon l'une des revendications précédentes,
**caractérisé en ce que**
le dispositif de fixation (24) est déplacé par rapport au dispositif de contrôle (28) pendant le détachement d'élément de contact (14) de telle sorte qu'une position relative d'une ligne de détachement se déplaçant dans la direction longitudinale du conducteur toronné (12), à laquelle l'élément de contact (14) se détache du conducteur toronné (12), reste au moins sensiblement inchangée par rapport au dispositif de contrôle (28).

9. Procédé selon la revendication 8,
**caractérisé en ce que**
le dispositif de fixation (24) est monté mobile en translation et est suivi en fonction de la ligne de décollement qui se déplace, afin de maintenir la position relative de la ligne de décollement qui se déplace au moins sensiblement inchangée par rapport au dispositif de contrôle (28).

10. Système (22) de contrôle d'un assemblage (10) par liaison de matière entre un conducteur toronné (12) et un élément de contact (14), comprenant
- un dispositif de fixation (24) pour fixer un noeud de soudure (20) du conducteur toronné (12) présentant plusieurs fils individuels reliés entre eux par liaison de matière;
- un dispositif de contrôle (28), qui est conçu pour s'engager au moins indirectement sur l'élément de contact (14) afin de détruire l'assemblage (10) et sw détacher celle-ci du conducteur toronné (12), **caractérisé en ce que**
le dispositif de contrôle (28) présente deux mâchoires de serrage (30) entre lesquelles l'élément de contact (14) est serrée au moins indirectement et est soumise à une force de traction (F) pour détacher l'élément de contact (14) au moins essentiellement transversalement à la direction longitudinale du conducteur toronné (12).
